# EUROPEAN PATENT SPECIFICATION

(11) **EP 1 208 427 B1**
(45) Date of publication and mention of the grant of the patent: **04.10.2006**
(21) Application number: 00950169.3
(22) Date of filing: 14.07.2000
(51) Int. Cl.: G06F 9/44, G06F 12/02

(54) **A PROCESSOR ARCHITECTURE**
PROZESSORARCHITECTUR
ARCHITECTURE DE PROCESSEUR

(30) Priority: 21.07.1999 SE 9902752
(43) Date of publication of application: 29.05.2002
(73) Proprietor: TELEFONAKTIEBOLAGET LM ERICSSON (publ), 164 83 Stockholm (SE)
(72) Inventor: TJÄRNSTRÖM, Robert, S-141 31 Huddinge (SE)
(74) Representative: Herbjörnsen, Rut
(86) International application number: PCT/SE2000/001494
(87) International publication number: WO 2001/006355

(56) References cited:
- EP-A2- 0 171 934
- WO-A1-96/08948
- US-A- 4 912 629
- US-A- 4 922 414
- US-A- 5 535 390
- US-A- 5 555 434

## Description

This invention relates to a processor architecture of the kind disclosed in the preamble of claim 1. The processor is particularly, but not exclusively, adapted to execution of functional programs.

### TECHNICAL FIELD OF THE INVENTION

Program development is very costly. These costs could sometimes be reduced if the program could be made in a functional language since it is hard for a user to use a machine programmed in a conventional language - it requires a lot of knowledge - and because of the complexity a programmer might introduce hidden errors.

### The development of programming languages

The development of the first electronic computer started the development of several programming languages suited for this type of computer, such as FORTRAN, COBOL, Algol, BASIC, Pascal. These languages have been called imperative languages, below also called conventional languages, mainly because of the fact that they normally give programs that consist of a sequence of commands or instructions to be executed sequentially by a conventional computer, i.e. a computer designed according to the principles developed by John von Neumann. Imperative kind of programs have became increasingly complex and often contain a lot of errors, are difficult to read, difficult to understand and particularly hard to modify.

An increasing discomfort with these imperative languages led to the development of another series of languages, so called functional languages: LISP, ISWIM, Scheme (a dialect of LISP), ML, Hope, SASL, and so on. The driving force behind the development of these languages was conceptual simplicity; no particular machine influenced the design. Functional programming languages have several properties alleviating some of the disadvantages of the more conventional programming languages.

For additional information and understanding we refer to the textbook "Functional Programming Using Standard ML", Åke Wikström, Prentice Hall 1987.

A program written in a functional language can be seen as a set of definitions of properties of objects and as computation rules. The definitions are the declarative part and the computation rules are the operational part that the computer uses during execution. Functional languages provide a higher-level interface to the computer, which makes it possible for the programmer to abstract away from hardware-related details of the computer. As a positive side-effect, functional programs are often shorter and easier to understand than conventional imperative programs.

Nowadays functional languages are implemented as a virtual machine on a conventional processor. This has been done with compilers or interpretating programs. This means that a program is executed which interprets the program instructions. Every program instruction results in that a number of machine instructions are executed. The execution will therefore be slow.

It is clear that some of the benefits of the functional program approach have been held back by the fact that practically no useful dedicated hardware has been on the market for the process of storing and executing functional programs in an effective manner. Some processors adapted to execute functional programming languages, so called FFP machines, are discussed in the textbook "High-level Language Computer Architecture" (ISBN 0,88175-1342-4) from 1988, chapters 11 and 12, and have been constructed and manufactured from time to time. Dedicated Lisp working stations were for instance furnished to the middle of the eighties. A transputer from Inmos Ltd, which is a processor for built-in systems was introduced in the middle of the eighties and is still on the market.

A particular kind of functional language is Erlang, which is developed by the Applicant for real-time applications. In spite of the disadvantage that functional programs are slow to execute on the von Neuman kind of computer, much slower than the imperative languages, the use of Erlang is increasing. However, the capacity of the computers having Erlang installed is not enough for some applications. Erlang programs are built as a number of communicating processes, also called processes. A switch is often made between execution of different processes. This switch is improductive and should be made as fast as possible. For the moment being this is made in software, in a so called "run-time system".

Since data programs written in functional languages, such as Erlang, provided on conventional computers are very power consuming, too much for a lot of applications, there is a need for providing a hardware having a low power dissipation. Low power dissipation is essential in most products. Demand for low power dissipation will be increasing in the future. High power dissipation hinders further processor speed improvement.

US 4 912 629 discloses a processing system for executing programs written in languages where instructions are kept in linked lists and pointers are used to determine their order. According to US 4 912 629 counters are used to determine which cells are in use,in order to find free cells without unnecessary delay.

### SUMMARY

### OBJECTS OF THE INVENTION

An object of the invention is to provide a micro processor which is adapted to execute programs or at least parts of programs written in a language having a sequential instruction flow, for instance in Erlang.

Another object of the invention is to provide a co-processor executing a functional language in a real-time operative system, One or several co-processors of this kind should be able to handle processes demanding great capacity.

Still another object of the invention is to provide a processor, particularly dedicated to Erlang.

Yet another object of the invention is to provide a processor adapted to a functional language in wireless portable equipment. Processors in wireless portable equipment are provided with a content of software (SW) which often need be changed. In such a case a processor adapted to handle a functional language, such as Erlang, should give a great advantage.

Still another object of the invention is to provide a processor adapted to a functional language having fewer memory accesses than what is common today. This means a need for a high instruction density.

Another object of the invention is to provide a device able to handle much functionality implemented in software and which has a low or reasonable power dissipation, thus to provide a great amount of functionality to low power consumption.

Yet another object of the invention is to provide dedicated hardware support for garbage collection and process switching in the processor in order to improve execution performance and lower power dissipation. Such mechanisms are commonly implemented in a "run time system" in software.

### INVENTION

The invention relates to a processor architecture adapted to program languages operating with a sequential instruction flow and handling data through use of lists or tuples or simple types, and comprising an instruction holding means, a data memory means storing data objects, and execution means. The objects mentioned above can be solved by providing means for handling references to data objects referenced by bindings and comprising means to increment reference counts to a data object and to decrement reference counts to a data object in dependence of an actual instruction from the instruction holding means.

Storage means could be provided in the means for handling temporary storage of data, and to keep notice of bindings to said temporary storage. When the notice keeping means detects generation of a zero reference to an object, meaning that this object is not needed anymore, it preferably makes the memory slot for that object available as a free memory slot. The means for handling temporary storage of data comprises preferably a parameter memory means having means for keeping notice of the bindings to the stored values, and having means for storage of said data values.

Value storage means could store values and type information for the values fed to the parameter memory. The values, being a part of the data objects, have then the bindings to the parameters. The parameter memory will then transfer values between functions using the parameters and using the parameters for temporal storage. The parameter memory could replace parameter references in fetched instructions from the instruction memory means with stored actual values before computation. Means could be provided in the parameter memory for storing and managing environment information for the parameters, where the environment determines which parameters are currently valid parameters. Means could be provided in the parameter memory for storing and managing information for parameters and environments, where process information fed to the parameter memory is used to determine which environments and which parameters are currently valid.

A process identification register could be provided for identification of the currently executed process, and an environment identification register for identification of the currently executed environment. At least the top of at least one priority queue of processes to be executed is preferably kept available for reading. At least part of the process descriptor of the next to be executed process is then kept available for reading in the parameter memory means. In order to make a process switch:
* a new environment is created in the parameter memory, and at least the program counter is stored in said new environment,
* said new environment value is stored in the process descriptor of the current process, said process descriptor may be stored in the data memory,
* the environment value of the new process is restored,
* the new process is set to be the current process,
* at least the program counter is restored.

The instructions are preferably provided with only one instruction format, where each instruction is composed of a distinct number of sub-instructions. Each sub-instruction has in turn the same and only one instruction format comprising a first part and a second part, the first part determining the action to take and the second part providing a value to use in the action.

The invention could be adapted to execution of functional languages. Then a set of instructions are created comprising dedicated instructions for function calls, function returns, parameter transfer between functions. Then also a set of instructions could be created comprising dedicated instructions for incrementing and decrementing of memory references. The processor architecture disclosed above could be adapted to process parts of computer programs written in a functional language.

Thus, the invention relates to a processor architecture adapted to program languages operating with a sequential flow of instructions and handling data through use of simple values and lists and dynamically allocated arrays, and comprising an instruction holding means, a data memory means storing data objects, and execution means. The invention is essentially characterized by means handling simple values and references to data objects in dependence of an actual instruction from the instruction holding means, said dependence called a binding. It has also means to increment reference counts to a data object and to decrement reference counts to a data object in dependence of an actual instruction from the instruction means, and in dependence of the means storing a reference to said data object. The invention could comprise means for handling storage of simple data and references to data objects in the means, said stored data and references to data objects referred to, by means of identifiers, from instructions from the instruction means. Storage means could be provided in the means for handling storage of simple data and references to data objects. The means for storage of values could comprise a parameter memory means having means for keeping notice of the bindings to the stored values, and having storage means for storage of said data values. The storage means could be provided in the means for handling temporary storage of values, where the stored values comprise at least type information and numeric information, and the type information characterizes the numeric information.

The parameter memory could be used for transfer of, and storage of, function arguments such that argument values are stored in the parameter memory in dependence of an actual instruction from the instruction means, then bond to certain identifiers in the instructions. The values could be read from the parameter memory in dependence of said identifiers in an actual instruction. Means could be provided in the parameter memory for storage and managing scope information, denoted environment, for the stored values, where the scope determines which values are currently valid and eligible to be read out from the storage. Means could be provided in the parameter memory for storage and managing information for scope and values, where the means is used for storing and managing process information, and the process information determines which scopes and values are currently valid and eligible to be read out from the storage. A process identification register could be provided for identification of the currently executing process. A scope identification register could also be provided for identification of the currently valid scope. At least the top of at least one priority queue of processes to be executed could be kept available for reading, At least part of the process descriptor of the next to be executed process could be kept available for reading. In order to make a process switch preferably:
* a new scope is created and at least the program counter is stored in the parameter memory using said new scope;
* the new scope value is stored in the process descriptor of the current process, said process description may be stored in the data memory;
* the value of the scope for the switched to process is restored from the process descriptor of said process;
* the switched to process is set to be the current process;
* at least the program counter is read from the parameter memory and is restored.

The invention relates also to a process architecture, which is characterised by instructions having only one instruction format, where each instruction is composed of a distinct number of sub-instructions, each of which has in turn the same and only one format comprising a first part and a second part, the first part determining the action to take and the second part providing a value to use in that action. The process architecture is preferably adapted to execution of languages using functions and dynamic memory allocation. It could then be characterised by an instruction set comprising
dedicated instructions for making function calls and transfer function arguments in the same instruction;
dedicated instructions for making return from function and transfer function result in the same instruction.

A set of instructions could comprise dedicated sub-instructions for incrementing or decrementing the number of references to data objects stored in the data memory, where said sub-instructions specify identifiers representing bindings to the parameter memory. The parameter memory could in turn store memory references to the actual data objects referred to by said bindings. The managing of the storage utilisation of the parameter memory is an autonomous process, which is able to read out values from the parameter memory and store these values in the data memory. It could then make storage positions in the parameter memory free to use, and be able to read back such values from the data memory and store these values back in the parameter memory and restore the information in for said values. When the number of processes having values in the parameter memory is larger than a specified limit values belonging to a chosen process could be moved to the data memory. When the number of scopes for a process in the parameter memory is larger than a specified limit values belonging to a chosen scope could be moved to the data memory. When the next to be executed process not having values in the parameter memory, but has such values moved to the data memory, at least some of these values could be moved from the data memory and restored in the parameter memory. When the number of scopes in the parameter memory for the current process goes below a specified limit, there are values for the current process moved to the data memory, at least some of these values could be moved from the data memory and restored in the parameter memory.

### ADVANTAGES

The processor architecture is designed to perform particularly well for the following cases:
- "Functional application" which constitutes the controlling structure in a functional language.
- Process switching, below called context switching (Other expressions for processes are tasks or threads. The expression process(es) will be used in the remaining of the text, although it should be understood that tasks or threads could be used as well). Normally, Telecom applications are implemented using a large number of processes. It is essential to be able to switch between these processes fast, in order not to loose performance.
- Message passing between processes.
- Memory management, including garbage collection.

Functional languages leave memory management to the run-time system. Handling memory takes time from the processor and is generally regarded as a problem.
When using the invention provided with for instance Erlang, this is done in the processor by a dedicated unit and interfering very little with the useful computing.

The processor according to the invention executes the instructions in a RISC like manner, i.e. in a sequential instruction flow easy to pipeline. Thus, the processor according to the invention is not a reduction machine. It has a simple combinatory instruction decoding, efficient execution for function calls, support for creation and manipulation of lists and tuples, support for fast context switching, and high code density. This keeps the power dissipation on a low and economical level avoiding the need for costly cooling systems.

### BRIEF DESCRIPTION OF THE DRAWINGS

For a more complete understanding of the present invention and for further objects and advantages thereof, reference is now made to the following description taken in conjunction with the accompanying drawings, in which:
- FIG 1: illustrates a first embodiment of a dedicated processor architecture for handling functional languages working with a sequential instruction flow, such as Erlang.
- FIG 2: illustrates a preferred embodiment of an instruction pipeline.
- FIG 3: illustrates an embodiment of the internal structure of the parameter memory included in the processor according to the invention.
- FIG 4: illustrates the hierarchy in the specification of the parameters stored in the parameter memory.

### DETAILED DESCRIPTION OF EMBODIMENT

The instruction set architecture (ISA) in the processor according to the invention is designed to be compact and efficient for the execution of functional languages and particularly for Erlang. However, the inventive concept is also adaptable to some other kinds of languages than functional. Some design goals for the ISA are identified below:
- Execution in a RISC like manner, i.e. a sequential instruction flow easy to pipeline.
- Simple instruction decoding.
- Efficient execution for function calls.
- Support of fast context switching.
- High code density.
- Supporting garbage collection for lists an tuples.

There is preferably only one instruction format. Every instruction is preferably composed of a distinct number of sub-instructions, for example three, each having the same format. The first sub-instruction format comprises a first part, which determines the action to take, and a second part, which provides a value used in the action taken. The first sub-instruction may determine the interpretation of the full instruction, or may allow other sub-instructions to instruct concurrent independent actions in a Very Long Instruction Word (VLIW) manner.

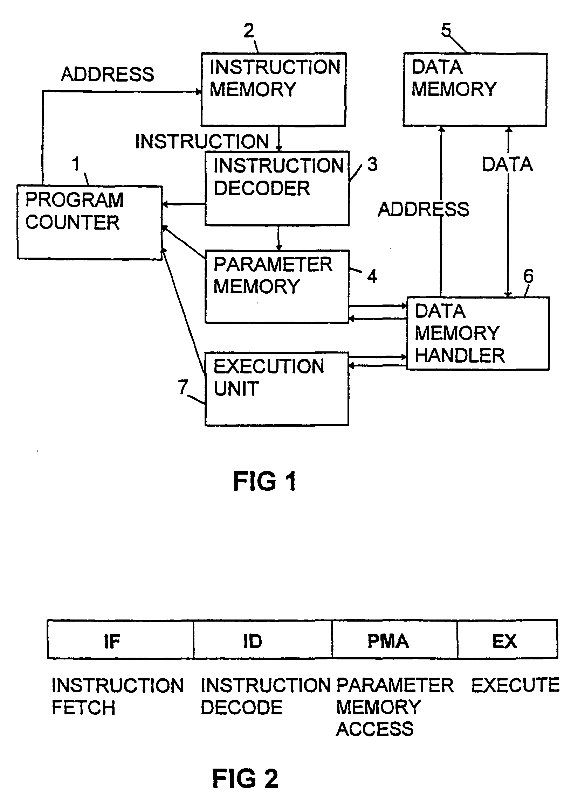

Reference is now made to FIG 1, which illustrates an embodiment of the main architecture of the processor according to the invention, which fulfils the features mentioned above. The program for the processor is written into an instruction memory 2. The program is stepped forwards by a program counter 1 providing an address to the instruction memory 2.

As illustrated in FIG 2, the processor architecture is in this embodiment basically a four stage pipeline, comprising the stages Fetch IF, Instruction Decode ID, Parameter Memory Access PMA and Execute EX, as will be further described below. Since stores can be pipelined a fifth store stage also could be regarded as a part of the pipeline.

Returning to FIG 1, the instruction to be fetched is pointed out by the program counter 1. It is fetched from the instruction memory 2 by the instruction fetch mechanism IF. Therefore, the program counter is connected to the instruction memory 2 and feeds an address to the memory. The memory then returns the instruction pointed to by the address.

The fetched instruction is stored in the memory 2 in coded form, i.e. in a form compiled into the machine code of the processor, and is then fed to an instruction decoder 3, which makes the Instruction Decode ID. Unconditional branches are detected during the decoding stage. The decoder 3 transfers the instruction into a number of control signals functioning as control words.

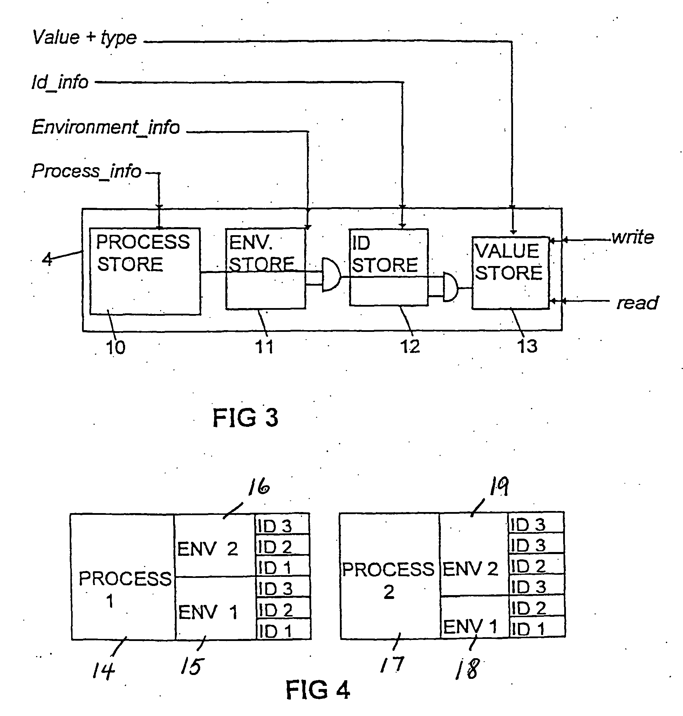

The decoded instruction is then transferred into a parameter memory 4 stage, for the Parameter Memory Access PMA. This parameter memory 4 is a hardware means of a particular kind provided for this invention. Within this stage parameter references in the decoded instruction will be substituted by their corresponding actual values which are stored in the parameter memory 4, as will be apparent below in relation to FIG 3.

Thus the processor does not operate with registers or a stack. It is instead operating with parameters. The parameters are temporary bindings to values, which are temporarily stored in the parameter memory 4 in the processor. Parameters are allocated according to need and are freed upon completion of function application or upon explicit instruction to be. Parameters are accessed according to context. The maximum number of parameters is not limited by the architecture but depends on the specialised processor implementation. This gives a good and efficient support for handling of function arguments and local variables/bindings.

Parameters thus take a central part in the instruction set architecture of the processor according to the invention, as will be illustrated below. Parameters are used for arguments of functions and local bindings made within a function body, and for argument transfer at function calls.

The parameter memory 4 is designed to provide a fast instruction execution and stores current bindings, i.e. function parameters and local variables. This means that parameter transfer, local bindings and function results do not go through the main data memory 5 and instead through the fast parameter memory 4.

Within this parameter memory stage certain decoded instructions will create new parameter bindings by storing actual values in the parameter memory 4 and creating parameter bindings to these values. Stored values may be provided from the decoded instruction or may be provided from a register, or may be fetched from a data memory 5. Several operations of either kind of store and substitute may be done during each clock cycle.

During the parameter memory access stage parameter bindings in an instruction are replaced with actual values. The parameter memory 4 could preferably support at least two such replacements per clock cycle. After the parameter memory stage parameter bindings in an instruction have been substituted with actual values where the actual values are fetched from the parameter memory.

The data memory handler 6 keeps record of the addresses in the data memory 5, because in functional languages, such as Erlang, the program is not working with addresses and pointers as in imperative languages. Such features are hidden in a so called run-time procedure which means that the data memory handler 6 is needed to determine and keep record of the addresses for the particular registers comprising the data for the processes stored in the data memory 5. Addresses for stored data is delivered back to the execution unit 7.

The parameter memory 4 feeds substituted instruction data and code words to the execution unit 7, which executes the instruction. The parameter memory 4 comprises also a register into which at least the current identity, id, of a process is stored, as will be discussed further when describing FIG 3.

The parameter memory 4 is in fact the unit, which reads the registers in the data memory 5, while an execution unit 7 connected to the parameter memory 4 is the unit, which writes the data into the registers. The data memory handler 6 is connected to co-operate with both the parameter memory 4 and the execution unit 7.

Similarly to the language Erlang the processor architecture is based upon processes. A first dedicated register in the parameter memory holds the current process id, *cpr.* A second dedicated register holds the current environment identity, *env*. An environment means a sequence of instruction within which certain parameter references are valid, for instance the scope of the value bindings.

The preferred structure of the parameter memory 4 is presented in FIG 3. It comprises a process storage plane 10 in which the current process, process_info, is stored, an environment storage plane 11 in which the information of the environments, enviromnent_info, for the process is stored.

While not directly visible in the instruction set, processes are used to keep track of processes (or tasks or threads) in the high level language executed on the processor. There is a correspondence between an Erlang process and a process in the processor. A spawn instruction creates a new process, initiates its environment and associates it with its process descriptor. Another instruction pushes a process on a process queue. Another instruction switches out the current process and switches in the first process in the process queue to become the new current process.

At least the following information is stored in the process descriptor:
- Pointer to first message.
- Pointer to last message.
- Current environment (when not executmg).
- Other misc information, such as a list of linked processes.

Also, the architecture is based upon the concept of environments. An environment (*env*) defines the current bindings in the parameter memory 4. Environments are used to keep track of parameter scope. A new environment, *env,* is created at the beginning of a function call and becomes the current environment. The parameter bonds in a function call are bonded in the new environment. At a function return the current environment is terminated, and the environment of the calling function is restored as the current environment, i.e. the current environment is replaced with the previous environment. All parameter bindings in the replaced environment are purged at function return.

As illustrated in FIG. 4, a parameter is valid only within its environment Similarly an environment is valid only within its process.

Thus, when an instruction is provided which makes a function call then *env* is stepped up with 1. When an instruction comes, which indicates a jump back then *env* is stepped down with 1.

The parameter memory 4 also has a storage plane 10, for instance comprising a register *crp,* holding process identity for a certain parameter value and type stored in plane 13. As illustrated in FIG 3, searching for the parameter id, actual environment, *env,* and actual process is transmitted to the value storage 13.

The parameter memory 4 can perform a number of actions. Examples of these actions and their corresponding results and required inputs are listed below.

Read: The parameter memory 4 returns the type and value, stored in the value storage plane 13, of the specified parameter. Information of the parameter id, actual environment and actual process is provided to the storage planes 10, 11 and 12 in the parameter memory 4.

Pop: The parameter memory 4 returns the value + type (stored in the storage plane 13) of the specified parameter. In addition it eliminates the parameter and its value from the parameter memory 4. Information of the parameter id, actual environment and actual process is provided to the storage planes 10, 11, and 12 in the parameter memory 4.

Set: The parameter memory 4 stores a new parameter with a specified id (in the type and value storage plane 13). Information of the parameter id, actual environment, actual process and parameter value is provided to the planes 12, 11, and 10 in the parameter memory 4.

Garb: The parameter memory eliminates the parameter and its value from the planes 10-13 in the memory. Information of the parameter id, actual environment and actual process is provided to the parameter memory 4.

Garb env: The Parameter Memory eliminates all parameters and their values from the planes 10-13 for the specified environment value, information of the environment and the actual process is provided to the parameter memory 4.

A read operation could, for example, work in the following way. The three leftmost storage planes 10, 11, 12 in FIG 3 perform an associative search. The line yielding hits in the three storage planes selects the value + type data stored for that line in the rightmost storage plane 13 in FIG 3.

The function is similar for storing, except that value + type data is stored instead of being read. The garb and pop operations discard the information in the addressed position and make it free to use.

Thus, the parameter memory 4 is used to store values, and type information for these values. Parameters are bound to the values where the parameters are used to transfer values between functions and are used for temporal storage. The parameter memory 4 can replace parameter references in fetched instructions with stored actual values before computation.

Search in the files could be made in some kind of associative process. However, the search could be implemented in some other way as well, for example to use compromised addresses by for example process and *env.* It is also possible to connect the process storage to an associative memory and the environment storage 11. Then, the parameter reference is fed to the parameter memory and makes a search. A value is out-putted.

The parameter memory 4 can also manage environment information for the parameters where the environment determines which ones of the stored parameters, which are the currently valid parameters.

The parameter memory 4 could as well manage process information for the parameters and environments where the process information determines which ones of the stored environments, which are currently valid environments, and which of the stored parameters, which are currently valid parameters.

This means that parameters are used instead of registers or stack. This leads to more efficient handling of function calls and local bindings. A context dependent mechanism is used for addressing the parameters. This makes the instruction set architecture here described independent of the amount of parameter storage in a particular processor implementation.

At least one process queue is administrated by the processor. Several queues may be administrated, for instance for different priority levels.

Since the Parameter Memory 4 has a limited number of parameter slots it may not be sufficient to hold all parameters for a large program at the same time.

If the Parameter Memory 4 begins to reach its capacity limit, parameters begin to be stored in the data memory 5, thus freeing slots in the Parameter Memory 4. This action is called swap out of parameters. The opposite action, called parameter swap in, reads previously stored parameters from the data memory 5 and restores them in the Parameter Memory 4 with correct process, environment and parameter id values.

Both parameter swap in and swap out are done automatically by the processor without interfering the instruction execution.

The top of the process queue(s) is observed. If a process (PF) is found there which is not currently in the Parameter Memory 4, parameters for a process (which is not the current process) in the Parameter Memory 4 become swapped out, and parameters in the topmost environments of the found process (PF) are swapped in to the Parameter Memory.

A certain mechanism determines which process, which should have its parameters swapped out. For instance, Least Recently Used (LRU) could be the strategy by which it is decided which process to swap out.

If for the current process the number of environments in the Parameter Memory begins to reach the maximum limit, an activity is started to swap out parameters of the lowest environment to the data memory. Similarly, if the number of environments in the Parameter Memory begins to reach the lower limit, an activity is started to swap in parameters of the highest environment stored in the data memory (if any).

The parameter swap in and swap out mechanisms ensures that the most likely to be used parameters are stored in the Parameter Memory 4.

Regarding the memory management, the memory slots in the data memory 5 not used are organised as a list of available memory registers. A determined register (free) in the data memory handler 6 points to the first element of that list. Upon a request for storage of an element, this element is stored in the memory slot denoted by the mentioned dedicated register (free). The register (free) is then updated to point to the now actual first available memory position, below called memory slot, which earlier was the second in the list. Upon releasing a used memory slot this slot is placed in the beginning of the list of available memory slots.

As mentioned above Erlang handles data through the use of tuples and lists and simple types. These data are referenced by bindings. When a data object is not referenced by a binding, it is not needed any more and can be thrown away. Its memory slot can then be used for other data objects. Thus, memory slots to which no reference is made are considered free to use. This means that an automatic garbage collection could be regarded as being made. Notice is kept of such memory slots, and they are released upon request.

Memory management is thus supported well in this architecture and is performed according to the principle of reference counting. This means that some sub-instructions control incremented reference and decremented reference, respectively, for data objects. When such a sub-instruction is executed the reference part of a data object is either incremented or decremented automatically by the unit for memory management. If a zero reference occurs and is detected its memory slot is made free and available as free memory slot for usage of other data objects.

As mentioned above, the architecture of the parameter memory 4 is based on processes and there will often be a need to switch from one process to another process. Then the following operations need be done.

Upon a context switch the current environment identity is stored in a Process (or Task) Descriptor pointed out by the process register (cpr). Other registers may be stored in the parameter memory if needed. When the process is switched back the register values can then be restored from the parameter memory. Thus, the only access to the data memory 5 needed to accomplish a context switch is to store and restore the environment.

In order to make a switch:
- Bind data values of registers in the current working set to parameters and store them in the parameter memory 4. The value of the current environment is stored in the process descriptor of the current process. *Env* then functions as a key for pointing to where in the parameter memory 4 a reading should begin at restore.
- Read *env* and restore into the parameter memory 4 the new "working set" of the new process to which the switch is made from the process descriptor in the data memory 5 comprising the environment for that new process.
- Restore the program counter 1 to the value next after it was before the actual switched process were switched out.

Following this scheme time consuming memory access to the main memory 5 is minimised, and fast context switching is achieved.

The instruction set architecture could for example be intended for execution of functional languages, supporting the languages with dedicated instructions for function calls, function returns, transfer of arguments between functions, and process management. There are particular instructions for creating, reading, writing and manipulation of the data objects, which occur in Erlang, i.e. lists and tuples and simple types.

### Examples of instruction format

*instruction ::* = *sub-instruction, sub-instruction, sub-instruction*
*sub-instruction ::* = *tag, value*
where *tag* specifies how *value* should be interpreted. For example: *par, 5* means that parameter number *5* is specified. This presents the logical organisation of the instructions. In an actual processor implementation all tags can for example be grouped together. The tag in the first sub-instruction typically specifies how the full instruction shall be interpreted. If for example *tag* in the first sub-instruction specifies a binary arithmetic operation, the two other sub-instruction specify the operands, and the value of the first sub-instruction specifies the type of arithmetic operation.

There can be exceptions from this rule. Some of the instructions in the first memory slot do only use the first two sub-instructions in which case the third slot can be utilised for a single sub-instruction, i.e. there could be a group of independent sub-instructions which only operates in the third slot in an instruction. Some independent sub-instructions can be placed in the second slot as well.

### Examples of tag/value combinations are:

*Tag, value ::* = *fun, fun_number* (call function *fun_number*)
| *par, par_number* (use the specified parameter)
| *pop, register_number* (return back from current function, deliver result in the specified register)
| *reg, register_number* (use the value in *register_number*)
| *alu, alu_operation* (perform the operation given by *alu_operation*)
| *gar, par_number* (free the space used by this parameter)
| etc.

### Example

The following registers could be used in the processor:
- *acc:*: stores the result from alu operations,
- *cpr:*: stores the current process id,
- *env:*: stores current environment,
- *id:*: stores the memory address of the latest stored element,
- *res:*: holds a result value when returning from a function,
- *d0:*: holds a data element. Its parts can be addressed by *d01, d02, d03, d04,*
where *d01* holds the element type value, *d02* holds a numerical value, *d03* and *d04* holds pointer/integer values including value type,
- *free:*: stores the first free memory slot.

The processor could use following not addressable registers:
- *env-old:*: stores the previous environment
- *cnt:*: stores the last allocated parameter number.

As mentioned above, parameters are used for argument transfer at function calls, and for local bindings. When a function call is executed the arguments are listed in the second and third sub-instructions in the calling instructions. The arguments get consecutive numbers as they appear starting the first sub-instruction in a new function body.

A local binding is made through the *par* or *pad* instructions mentioned below, e.g.
(*pab:5, reg: acc,* *.*)
binds parameter 5 to the value in the register *acc* in the current environment in the current process. * represent arbitrary element.

There are also particular instructions for manipulating the references to data, i.e. to support the language with dedicated instructions to increment or decrement the number of memory references to a data object.

Experiences with this ISA (Instruction Set Architecture) has indicated a considerable reduction of instructions in order to make a particular functionality. This means correspondingly fewer numbers of memory accesses. Memory accesses demand much power. A reduction of them will therefore lower the power consumption in the system.

Although the invention is described with respect to exemplary embodiments it should be understood that modifications can be made without departing from the scope thereof. Accordingly, the invention should not be considered to be limited to the described embodiments, but defined only by the following claims, which are intended to embrace all equivalents thereof. As mentioned above, the parameter memory 4 is based on processes. Therefore, this kind of device can be provided even for computers handling other kinds of languages using processes (or tasks or threads) than functional languages, for example C and C++. Context switching is also provided in for instance the language ADA, and thus the features described for the context switching could also be valid for other kinds of languages handling context switching. Data management of the kind described above is also made in for instance the modem language Java and is therefore valid also for such kinds of languages.

## Claims

1. A processor adapted to program languages operating with a sequential flow of instructions and handling data through use of simple values and lists and dynamically allocated arrays, and comprising an instruction holding means (2,3), a data memory means (5) storing data objects, execution means (7), and storage means (4) for handling storage of values and references to data objects in dependence of an actual instruction from the instruction holding means (2,3), said dependence being called a binding;
means (6) to increment reference counts to a data object and to decrement reference counts to a data object in dependence of an actual instruction from the instruction holding means (2,3), and in dependence of the storage means (4), which handles simple values and references, storing a reference to said data object,
**characterized in that** the storage means (4) is a parameter memory means (4) having process information storage means (10), environment information storage means (11) and parameter identity storage means (12) for keeping notice of the bindings to the stored values, and having storage means (13) for storing said values.

2. A processor according to claim 1 **characterized by** parameter memory means (4) for handling storage of simple data and references to data objects in the means (6), said stored data and references to data objects being referred to, by means of identifiers, from instructions from the instruction holding means (2,3); storage means (13) in the means (4) for handling storage of simple data and references to data objects.

3. A processor according to claim 1, **characterized in that** said storage means (13) in the parameter memory means (4) is for handling temporary storage of values and stores values, which comprises at least type information and value information.

4. A processor according to claim 3, **characterized in that** the parameter memory (4) is used to transfer and store function arguments, such that argument values are stored in the parameter memory (4) in dependence of an actual instruction from the instruction holding means (2,3), then bond to certain identifiers in the instructions, and that said data values are arranged to be read from the parameter memory (4) in dependence of said identifiers in an actual instruction.

5. A processor according to any one of the preceding claims, **characterized by** means (11) in the parameter memory (4) for storing and managing scope information for the stored parameters, where the scope information determines which parameters are currently valid and eligible to be read out from the storage (13).

6. A processor according to any one of the preceding claims, **characterized by** means (10-13) in the parameter memory (4) for storing and managing information for scope and values, where the means (10) is used for storing and managing information for scope and data values, where process information determines which scopes and values are currently valid and eligible to be read out from the storage (13).

7. A processor according to any one of the preceding claims, **characterized by**
a process identification register (14; 17) for identification of the currently executed process;
a scope identification register (15, 16, 18, 19) for identification of the currently valid scope.

8. A processor according to any of the preceding claims, **characterized in that** at least the top of at least one priority queue of processes to be executed are kept available for reading, and that at least part of the process descriptor of the next process to be executed are kept available for reading.

9. A processor according to claim 8 **characterized in that** in order to make a process switch the means (4,5,6) for handling values and references:
* creates a new scope and at least the program counter is stored in the parameter memory (4) using said new scope;
* stores said new scope value in the process descriptor of the current process, said process descriptor may be stored in the data memory (5);
* restores the scope value for the process switched to from the process descriptor of said process;
* sets the process switched to to be the current process;
* reads at least the program counter from the parameter memory (4) and performs the restoring.

10. A processor according to any of the preceding claims, **characterized by** instructions having only one instruction format, where each instruction is composed of a distinct number of sub-instructions, each of which has in turn the same and only one format comprising a first part and a second part, the first part determining the action to take and the second part providing a value to use in that action.

11. A processor according to any of the preceding claims adapted to execution of languages using functions and dynamic memory allocation **characterized by** a set of instructions comprising dedicated instructions for making function calls, function returns, parameter transfer between functions.

12. A processor according to claim 10, **characterized by** a set of instructions comprising dedicated instructions for incrementing or decrementing the number of references to data objects stored in the data memory (5).

13. A processor according to any one of the preceding claims, **characterized in that** it is adapted to process parts of computer programs written in a functional language.

## Patentansprüche

1. Prozessor, der angepasst ist an Programmsprachen, die mit einem sequentiellen Fluss von Anweisungen arbeiten und Daten durch Verwendung einfacher Werte und Listen und dynamisch zugeteilter Arrays handhaben, und der eine Anweisungshalte-Einrichtung (2, 3) umfasst, eine Datenobjekte speichernde Datenspeicher-Einrichtung (5), eine Ausführungseinrichtung (7) und eine Speichereinrichtung (4) zum Handhaben einer Speicherung von Werten und Referenzen auf Datenobjekte in Abhängigkeit einer tatsächlichen Anweisung von der Anweisungshalte-Einrichtung (2, 3), wobei die Abhängigkeit eine Bindung genannt wird;
eine Einrichtung (6) zum Inkrementieren von Referenzzählwerten auf ein Datenobjekt und zum Dekrementieren von Referenzzählwerten auf ein Datenobjekt in Abhängigkeit einer tatsächlichen Anweisung von der Anweisungshalte-Einrichtung (2, 3), und in Abhängigkeit der Speichereinrichtung (4), die einfache Werte und Referenzen handhabt, die eine Referenz auf das Datenobjekt speichert,
**dadurch gekennzeichnet, dass**
die Speichereinrichtung (4) eine Parameterspeicher-Einrichtung (4) ist mit einer Prozessinformations-Speichereinrichtung (10), einer Umgebungsinformations-Speichereinrichtung (11) und einer Parameteridentitäts-Speichereinrichtung (12) zum Beobachten der Bindungen zu den gespeicherten Werten, und mit einer Speichereinrichtung (13) zum Speichern der Werte.

2. Prozessor gemäß Anspruch 1, **gekennzeichnet durch** eine Parameterspeicher-Einrichtung (4) zum Handhaben einer Speicherung von einfachen Daten und Referenzen auf Datenobjekte in der Einrichtung (6), wobei sich auf die gespeicherten Daten und Referenzen auf Datenobjekte, mittels Identifizierern, von Anweisungen von der Anweisungshalte-Einrichtung (2, 3) bezogen wird; mit einer Speichereinrichtung (13) in der Einrichtung (4) zum Handhaben einer Speicherung der einfachen Daten und Referenzen auf Datenobjekte.

3. Prozessor gemäß Anspruch 1, **dadurch gekennzeichnet, dass** die Speichereinrichtung (13) in der Parameterspeicher-Einrichtung (4) zum Handhaben einer temporären Speicherung von Werten ist und Werte speichert, welche mindestens eine Typinformation und Wertinformation umfasst.

4. Prozessor gemäß Anspruch 3, **dadurch gekennzeichnet, dass** der Parameterspeicher (4) verwendet ist zum Transferieren und Speichern von Funktionsargumenten, so dass Argumentwerte in dem Parameterspeicher (4) in Abhängigkeit einer tatsächlichen Anweisung von der Anweisungshalte-Einrichtung (2, 3) gespeichert sind, dann mit gewissen Identifizierern in den Anweisungen verbunden sind, und dass die Datenwerte angeordnet sind, aus dem Parameterspeicher (4) in Abhängigkeit der Identifizierer in einer tatsächlichen Anweisung gelesen zu werden.

5. Prozessor gemäß einem der vorigen Ansprüche, **gekennzeichnet durch** eine Einrichtung (11) in dem Parameterspeicher (4) zum Speichern und Verwalten einer Bereichsinformation für die gespeicherten Parameter, wobei die Bereichsinformation bestimmt, welche Parameter aktuell gültig und geeignet sind, aus dem Speicher (13) ausgelesen zu werden.

6. Prozessor gemäß einem der vorigen Ansprüche, **gekennzeichnet durch** eine Einrichtung (10-13) in dem Parameterspeicher (4) zum Speichern und Verwalten einer Information für einen Bereich und Werten, wobei die Einrichtung (10) verwendet ist zum Speichern und Verwalten einer Information für einen Bereich und Datenwerte, wobei eine Prozessinformation bestimmt, welche Bereiche und Werte aktuell gültig und geeignet sind, aus dem Speicher (13) ausgelesen zu werden.

7. Prozessor gemäß einem der vorigen Ansprüche, **gekennzeichnet durch** ein
Prozessidentifizierungsregister (14; 17) zur Identifizierung des aktuell ausgeführten Prozesses;
ein Bereichsidentifizierungsregister (15, 16, 18, 19) zur Identifizierung des aktuell gültigen Bereichs.

8. Prozessor gemäß einem der vorigen Ansprüche, **dadurch gekennzeichnet, dass** wenigstens das obere Ende wenigstens einer Prioritätsschlange auszuführender Prozesse zum Lesen verfügbar gehalten ist, und dass wenigstens ein Teil des Prozessdeskriptors des nächsten auszuführenden Prozesses zum Lesen verfügbar gehalten ist.

9. Prozessor gemäß Anspruch 8, **dadurch gekennzeichnet, dass** zum Tätigen eines Prozessumschaltens die Einrichtung (4, 5, 6) zum Handhaben von Werten und Referenzen:
- einen neuen Bereich erschafft, und wenigstens der Programmzähler in dem Parameterspeicher (4) mit Verwenden des neuen Bereiches gespeichert wird;
- den neuen Bereichswert in dem Prozessdeskriptor des aktuellen Prozesses speichert, wobei der Prozessdeskriptor in dem Datenspeicher (5) gespeichert werden kann;
- den Bereichswert für den Prozess, zu dem geschaltet ist, von dem Prozessdeskriptor des Prozesses wiederherstellt;
- den Prozess, zu dem geschaltet ist, als den aktuellen Prozess festsetzt;
- wenigstens den Programmzähler aus dem Parameterspeicher (4) liest und das Wiederherstellen durchführt,

10. Prozessor gemäß einem der vorigen Ansprüche, **gekennzeichnet durch** Anweisungen mit nur einem Anweisungsformat, wobei jede Anweisung aus einer bestimmten Anzahl von Unteranweisungen zusammengesetzt ist, von denen jede wiederum das selbe und nur eine Format hat, das einen ersten Teil und einen zweiten Teil umfasst, wobei der erste Teil die zu tätigende Handlung bestimmt, und der zweite Teil einen bei dieser Handlung zu verwendenden Wert bereitstellt.

11. Prozessor gemäß einem der vorigen Ansprüche, der angepasst ist zur Ausführung von Sprachen mit Verwenden von Funktionen und einer dynamischen Speicherzuteilung, **gekennzeichnet durch** einen Satz von Anweisungen, die dedizierte Anweisungen umfassen zum Tätigen von Funktionsaufrufen, Funktionsrückgaben, Parametertransfer zwischen Funktionen.

12. Prozessor gemäß Anspruch 10, **gekennzeichnet durch** einen Satz von Anweisungen, die dedizierte Anweisungen umfassen zum Inkrementieren oder Dekrementieren der Anzahl von Referenzen auf Datenobjekte, die in dem Datenspeicher (5) gespeichert sind.

13. Prozessor gemäß einem der vorigen Ansprüche, **dadurch gekennzeichnet, dass** er angepasst ist zum Verarbeiten von Teilen von in einer funktionalen Sprache geschriebenen Computerprogrammen.

## Revendications

1. Processeur conçu pour des langages de programmation fonctionnant selon un flux séquentiel d'instructions et manipulant des données par utilisation de valeurs et de listes simples et de tableaux alloués dynamiquement, et comprenant un moyen de maintien d'instructions (2, 3), un moyen à mémoire de données (5) stockant des objets de données, un moyen d'exécution (7), et un moyen de stockage (4) pour gérer le stockage de valeurs et de références à des objets de données d'une façon qui dépend d'une instruction effective provenant du moyen de maintien d'instructions (2, 3), ladite dépendance étant appelée liaison ;
un moyen (6) pour incrémenter des comptes de références à un objet de données et pour décrémenter des comptes de références à un objet de données d'une façon qui dépend d'une instruction effective provenant du moyen de maintien d'instructions (2, 3) et d'une façon qui dépend du moyen de stockage (4), qui manipule des valeurs et des références simples, en stockant une référence audit objet de données, **caractérisé en ce que** le moyen de stockage (4) est un moyen à mémoire de paramètres (4) comportant un moyen de stockage d'informations de traitement (10), un moyen de stockage d'informations d'environnement (11) et un moyen de stockage d'identités de paramètres (12) pour garder la trace des liaisons pointant sur les valeurs stockées, et comportant un moyen de stockage (13) pour stocker lesdites valeurs.

2. Processeur selon la revendication 1, **caractérisé par** un moyen à mémoire de paramètres (4) pour gérer le stockage de données simples et de références à des objets de données dans le moyen (6), lesdites données stockées et les références à des objets de données auxquelles il est fait référence, au moyen d'identificateurs, à partir d'instructions provenant du moyen de maintien d'instructions (2, 3) ; un moyen de stockage (13) dans le moyen (4) pour gérer le stockage de données simples et de références à des objets de données.

3. Processeur selon la revendication 1, **caractérisé en ce que** ledit moyen de stockage (13) du moyen à mémoire de paramètres (4) est destiné à gérer le stockage temporaire de valeurs et stocke des valeurs qui comprennent au moins des informations de type et des informations de valeurs.

4. Processeur selon la revendication 3, **caractérisé en ce que** la mémoire de paramètres (4) est utilisée pour transférer et stocker des arguments de fonctions de façon à stocker des valeurs d'arguments dans la mémoire de paramètres (4) d'une façon qui dépend de l'instruction effective provenant du moyen de maintien d'instructions (2, 3), puis à les lier à certains identificateurs contenus dans les instructions, et **en ce que** lesdites valeurs de données sont conçues pour être lues depuis la mémoire de paramètres (4) d'une façon qui dépend desdits identificateurs dans une instruction effective.

5. Processeur selon l'une quelconque des revendications précédentes, **caractérisé par** un moyen (11) dans la mémoire de paramètres (4) pour stocker et gérer des informations de portée pour les paramètres stockés, les informations de portée déterminant les paramètres qui sont valides à l'instant courant et éligibles pour une lecture depuis le moyen de stockage (13).

6. Processeur selon l'une quelconque des revendications précédentes, **caractérisé par** des moyens (10-13) dans la mémoire de paramètres (4) pour stocker et gérer des informations de portée et de valeurs, le moyen (10) étant utilisé pour stocker et gérer des informations de portée et de valeurs de données, les informations de traitement déterminant quelles portées et quelles valeurs sont valides à l'instant courant et éligibles pour une lecture depuis le moyen de stockage (13).

7. Processeur selon l'une quelconque des revendications précédentes, **caractérisé par** un registre d'identificateur de traitement (19 ; 17) pour l'identification du processus en cours d'exécution ;
un registre d'identification de portée (15, 16, 18, 19) pour identifier la portée valide à l'instant courant.

8. Processeur selon l'une quelconque des revendications précédentes, **caractérisé en ce qu'**au moins le haut d'au moins une file d'attente de priorité de processus devant être exécutés est maintenu disponible pour la lecture, et **en ce qu'**au moins une partie du descripteur de processus du processus suivant devant être exécuté est maintenue disponible pour la lecture.

9. Processeur selon la revendication 8, **caractérisé en ce que** pour effectuer un changement de processus, le moyen (4, 5, 6) de gestion de valeurs et de références :
• crée une nouvelle portée et le compteur de programme est au moins stocké dans la mémoire de paramètres (4) en utilisant ladite nouvelle portée ;
• stocke ladite nouvelle valeur de portée dans le descripteur de processus du processus courant, ledit descripteur de processus pouvant être stocké dans la mémoire de données (5) ;
• rétablit la valeur de portée pour le processus auquel le passage a été fait à partir du descripteur de processus dudit processus ;
• définit le processus auquel le passage est effectué comme étant le processus courant ;
• lit au moins le compteur de programme depuis la mémoire de paramètres (4) et effectue le rétablissement.

10. Processeur selon l'une quelconque des revendications précédentes, **caractérisé par** des instructions n'ayant qu'un seul format d'instruction, chaque instruction étant composée d'un nombre distinct de sous-instructions, dont chacune a elle-même le même format unique comprenant une première partie et une deuxième partie, la première partie déterminant l'action devant être effectuée et la deuxième partie fournissant une valeur à utiliser lors de cette action.

11. Processeur selon l'une quelconque des revendications précédentes, conçu pour l'exécution de langages utilisant des fonctions et une allocation dynamique de mémoire, **caractérisé par** un jeu d'instructions, comprenant :
des instructions spécialisées pour effectuer des appels à des fonctions, des retours de fonctions, et un transfert de paramètres entre fonctions.

12. Processeur selon la revendication 10, **caractérisé par** un jeu d'instructions comprenant des instructions spécialisées pour incrémenter ou décrémenter le nombre de références à des objets de données stockés dans la mémoire de données (5).

13. Processeur selon l'une quelconque des revendications précédentes, **caractérisé en ce qu'**il est conçu pour traiter des parties de programmes informatiques écrits dans un langage fonctionnel.
